# EUROPEAN PATENT APPLICATION

(11) **EP 4 011 655 A1**
(43) Date of publication of application: **15.06.2022**
(21) Application number: 21213340.9
(22) Date of filing: 09.12.2021
(51) Int. Cl.: B60D 1/06, B60D 1/60

(54) **ANTI-THEFT DEVICE, ADAPTED TO FIT INTO THE TRAILER COUPLER HEAD OF A TRAILER VEHICLE TO PREVENT THE INSERTION THEREIN OF THE TOWBALL OF A TOWING BRACKET**

(30) Priority: 09.12.2020 IT 202000030122
(71) Applicant: Daken S.p.A., 70126 Bari (IT)
(72) Inventor: VENEZIA, Michele, I-75100 MATERA (IT); CORRADO, Luca, I-70022 ALTAMURA (Bari) (IT); LORUSSO, Giuseppe, I-70022 ALTAMURA (Bari) (IT)
(74) Representative: Savoca, Agatino

(57) **Abstract**

An anti-theft device (9) that is adapted to be inserted into the coupler head of the drawbar (T) of a trailer vehicle in order to prevent the towball of a towing bracket from being inserted therein comprises: a body (10) inside which a cavity (11) is defined, which cavity extends in an axial direction; a cap formed by a pair of half-caps (12) that are slidingly supported by the body (10) and movable in opposite directions along a transverse direction; an actuator (14) accommodated in an axially movable and/or rotatable manner inside the cavity (11) of the body (10) and comprising a tip (20) adapted to cause the expansion of said half-caps (12) from the compact condition to the expanded condition; a lock cylinder (26) axially accommodated in the cylindrical body (16) of the body (10); and a stop (30) which is integral in axial translation and/or rotation with the cylindrical body (16) and movable by means of the lock cylinder (26) between an inactive position, in which the actuator (14) is movable with respect to the body (10), and an active position, in which the actuator (14) is integral with the body (10).

## Description

### Technical field

This invention is generally in the field of connection elements for vehicles; in particular, the invention relates to an anti-theft device which is adapted to be inserted into the coupler head of the drawbar of a trailer vehicle in order to prevent the towball of a towing bracket from being inserted therein.

### Prior art

Anti-theft devices for vehicle trailers are known which are designed to be inserted into the spherical cap of the drawbar of the trailer so as to prevent a towing bracket from being inserted therein, and prevent the trailer from being hooked to and pulled by a vehicle.

These devices traditionally comprise an expandable spherical cap that consists of a plurality of plates that are moved apart from one another by means of an actuator inside the cap (usually a screw).

The actuator sliding toward the upper pole of the cap causes it to become forcibly wedged between the plates, causing the expansion thereof. In this way, once the device has been inserted into the drawbar of the trailer (when the cap is in the compact configuration), the actuator is operated (typically by means of a hex key), and as a result the cap expands until it is forcibly stopped against the internal walls of the head of the drawbar.

One example of a solution of the aforesaid kind is known from US 5743549 A, which discloses a device in which the plates of the cap are constrained at the root thereof to a rigid flange and elastically expand under the pressure of a screw provided with a head that, when ascending back along a cavity inside the plates (the cavity having a diameter smaller than said head), pushes these plates radially outward.

One problem encountered with solutions of this kind is that, in order to prevent the anti-theft device from being unduly removed from the drawbar of the trailer, it is necessary to prevent reverse operation of the actuator.

To this end, the prior art discloses the solution of obstructing access to the base of the actuator (which is usually engaged by a hex key or similar tool) by means of a traditional lock cylinder. The cylinder is inserted into the cap, so as to obstruct the access compartment to the actuator, and then secured to the device by rotating a traditional lock key.

Therefore, in order to remove the anti-theft device from the head of the drawbar, the key should be inserted into the cylinder and rotated so as to unlock said cylinder, and then the cylinder may be removed from the device. In so doing, the base of the actuator is exposed to the outside and the base may thus be engaged by the suitable tool; appropriately rotating the tool causes the actuator to descend and, when said actuator retracts from the cap, causes the plates to return to the compact configuration. At this point, the anti-theft device disengages from the internal walls of the head of the drawbar, which becomes accessible once again for a possible towing bracket.

However, a sequence of operations of this kind is fairly inconvenient, because it requires the actuator to be operated, the cap to be brought into the expanded condition, the cylinder to be inserted, said cylinder to be operated (in order to seal the actuator), and all of this to be repeated in reverse, and is also inconvenient on account of there being more parts to assemble and disassemble repeatedly.

A further example of an anti-theft solution of the kind mentioned above is known from DE 22 07 452 A1, which discloses a device in which an actuator (in the form of a hex head screw) engages a wedge which penetrates the hemispherical body, thereby expanding the segments thereof. In order to lock/unlock the device, a locking element is inserted into/removed from the actuator, which locking element obstructs the access section to the hexagonal seat so as to prevent the rotation of the actuator, and thus keep the device in the desired configuration. The locking element (in this example in the form of a key, instead of the lock cylinder of the example described above, which in any case represents an equivalent key) engages the sole actuator by which it is inserted/removed. Therefore, this case is also disadvantageous in that there are more parts to assemble and disassemble in sequence, according to that described above.

Understandably, these disadvantages limit the usability and reliability of the anti-theft device.

### Summary of the invention

The object of this invention is to overcome the aforementioned problems.

To achieve this object, an anti-theft device according to this invention comprises a body which movably supports at least two cap plates that form the spherical (or partially spherical) cap intended to be inserted into the coupler head of the drawbar of a trailer.

The body has an axial cavity into which an actuator is movably inserted, which actuator is capable of expanding the cap plates away from one another during the movement toward the upper pole of the cap.

A traditional lock cylinder is accommodated in the actuator, which lock cylinder is adapted to activate a stop which makes the actuator and the body integral, thus preventing the movement with respect to one another. In this case, therefore, a stop (operated by the cylinder) is provided that engages both the actuator and the body, unlike in the prior art where there is only the cylinder (or an equivalent locking means) that engages the sole actuator in order to simply obstruct the section accessible to an external tool.

In this way, once the cylinder has been operated, the stop activates and prevents the actuator from sliding out of the cap (because it is constrained to the body), thus locking the anti-theft device in the configuration with an expanded cap, and preventing it from being removed from the drawbar of the trailer.

The aforesaid and other objects and advantages are achieved, according to an aspect of the invention, by an anti-theft device having the features defined in claim 1. Preferred embodiments of the invention are defined in the dependent claims.

### Brief description of the drawings

The functional and structural features of some preferred embodiments of the anti-theft device for trailers according to the invention will now be described. Reference is made to the accompanying drawings, in which:
- Fig. 1A and 1B are, respectively, a schematic semi-transparent side view and a front view of a drawbar for trailers, with an anti-theft device inserted therein, according to an embodiment of the invention;
- Fig. 2 is an exploded perspective schematic view of the anti-theft device in Fig. 1A and 1B;

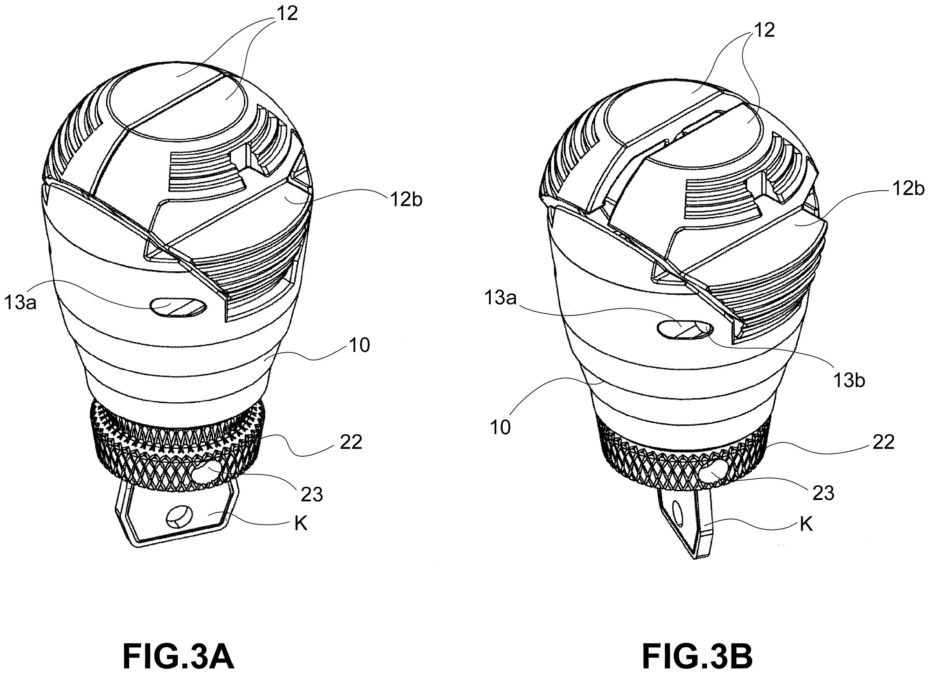

- Fig. 3A and 3B are two perspective schematic views of an anti-theft device, shown in a configuration with a compact cap and expanded cap, respectively, according to an embodiment of the invention;

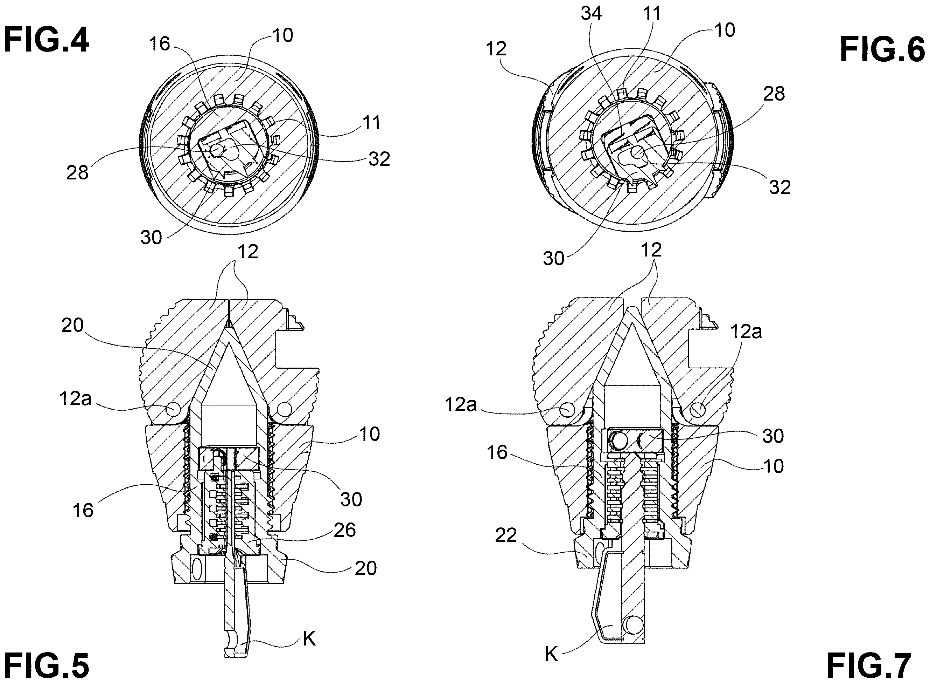

- Fig. 4 and 5 are schematic views in transverse cross section and in axial cross section, respectively, of an anti-theft device shown in a configuration with a compact cap, according to an embodiment of the invention; and
- Fig. 6 and 7 are schematic views in transverse cross section and in axial cross section, respectively, of an anti-theft device shown in a configuration with an expanded cap, according to the embodiment of the invention in Fig. 4 and 5.

### Detailed description

Before explaining in detail a plurality of embodiments of the invention, it should be clarified that the invention is not limited in its application to the design details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

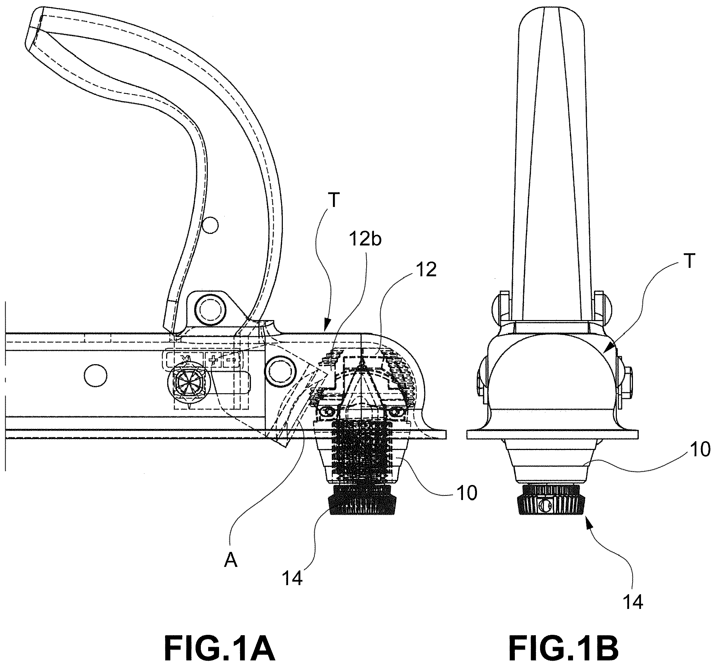

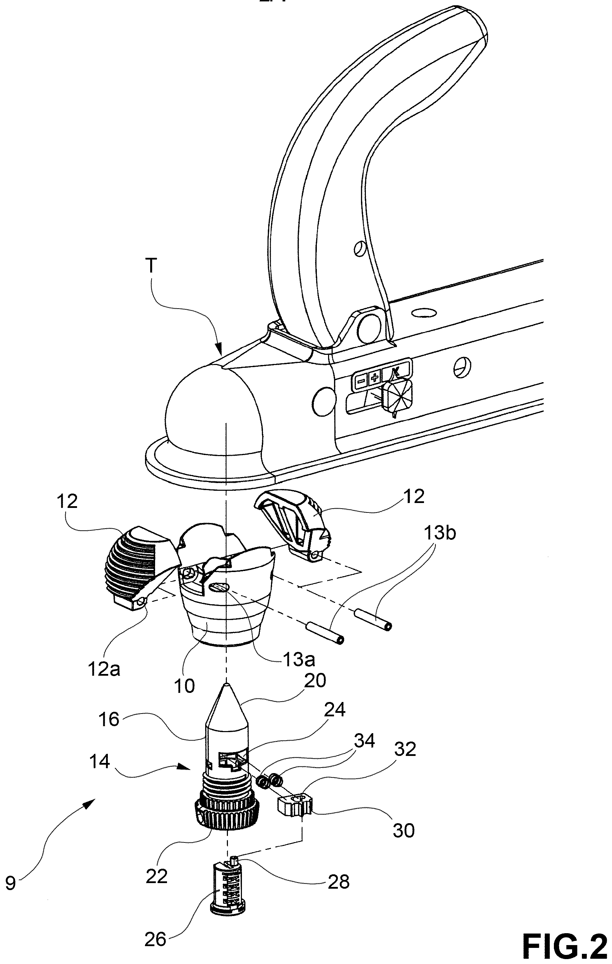

With reference, by way of example, to Fig. 1A to 2, an anti-theft device 9 which is adapted to be inserted into the coupler head of the drawbar T of a trailer vehicle in order to prevent the towball of a towing bracket from being inserted therein comprises: a body 10 inside which a cavity 11 is defined, which cavity extends in an axial direction; and a cap (which is at least partially spherical) formed by a pair of plates or half-caps 12 that are slidingly supported by the body 10 and are movable in opposite directions along a transverse direction perpendicular to the axial direction.

The half-caps 12 are movable from a compact configuration, in which they are maximally close together with respect to the transverse direction and the anti-theft device 9 is configured to be able to be inserted into the coupler head of the drawbar T, to an expanded configuration, in which the half-caps 12 are maximally spaced apart with respect to the transverse direction and the anti-theft device 9 is configured to avoid being removed from the coupler head of the drawbar T.

The anti-theft device 9 also comprises an actuator 14 which is accommodated in an axially movable and/or rotatable manner inside the cavity 11 of the body 10 and comprises a cylindrical body 16 which is hollow inside and axially surmounted by a tip 20 which is insertable into a corresponding seat defined by the two half-caps 12 inside these latter, the tip 20 being adapted to cause the expansion of the half-caps 12 from the compact condition to the expanded condition.

There is also a traditional lock cylinder 26, which is operable in rotation by means of a key K and axially accommodated in the cylindrical body 16 of the body 10, and a stop 30, which is integral in axial translation and/or rotation with the cylindrical body 16 and movable by means of the lock cylinder 26 between an inactive position, in which the stop 30 avoids engaging the body 10 and the actuator 14 is movable with respect to the latter, and an active position, in which the stop 30 engages the body 10 and the actuator 14 is integral with the latter.

The seat defined inside the half-caps 12 advantageously has an at least partially conical shape (with the vertex pointing toward the upper pole of the cap). In this case, the tip 20 may be, for example, substantially cylindrical (according to an embodiment that is not shown), such that the insertion of the tip into the seat causes the half-caps 12 to expand away from one another.

According to a preferred embodiment, the tip 20 of the actuator 14 is shaped as a conical portion, and is adapted to be inserted between the two half-caps 12 to cause the expansion thereof from the compact condition to the expanded condition. The seat defined inside the half-caps 12 advantageously also has a conical shape which is at least in part complementary to the shape of the conical tip 20 of the actuator 14. The actuator 14 is therefore axially translatable from a retracted position, in which the conical portion 20 is maximally retracted axially with respect to the half-caps 12, which are in their compact condition, to an advanced position, in which the conical portion 20 is maximally projecting axially from the body 10 and is maximally wedged between the two half-caps 12, which are in their expanded condition.

The tip 20 of the actuator 14 may be inserted between the half-caps 12 by means of a pure axial translation of the cylindrical body 16 (for example, by means of exerting an axial pressure on the base thereof), or by means of rotational-translation, so that a rotation of the cylindrical body 16 involves an axial translation of the tip 20. In this latter case, the cylindrical body 16 of the actuator may advantageously have an external threading 18 that is adapted to engage a complementary internal threading of the body 10 in such a way that a rotation of the cylindrical body 14 about its own axis causes an axial translation of the actuator 14 inside the body 10.

According to an alternative embodiment (not shown), the tip 20 may be cruciform or T-shaped, with one or two arms projecting transversely with respect to the axial direction of the cylindrical body, said arms being adapted to expand the half-caps 12 away from one another. The seat defined inside the half-caps 12 may advantageously have a substantially elliptical cross section, the major axis thereof having a length greater than the transverse extension of the arms of the tip 20 and the minor axis having a length smaller than the transverse extension of the arms of the tip 20 such that, when the arms of the tip 20 are aligned with said major axis, the half-caps 12 may be in their compact configuration, and when the arms of the tip 20 align with said minor axis, the half-caps 12 are expanded toward the expanded configuration.

According to a preferred embodiment, the side wall of the cylindrical body 16 comprises a through slot 24 which extends circumferentially and is adapted to allow the stop 30 to pass from the inactive position, in which said stop 30 is radially retracted inside the cylindrical body 16, to the active position, in which said stop 30 projects radially outside the cylindrical body 16 through said through slot 24.

The stop 30 may advantageously comprise a body from which a toothing projects, which toothing is adapted, when the stop 30 is in the active position, to engage corresponding grooves which are provided on the internal wall of the body 10 and are turned towards the interior of the cavity 11, so that, in the condition in which the toothing engages with said grooves, the actuator 14 is integral with the body 10, and therefore a reciprocal rotation between the actuator 14 and the body 10 is prevented.

The toothing of the stop 30 and the corresponding grooves of the body 10 are preferably configured in such a way that, in a condition in which the toothing engages with the corresponding grooves of the body 10, rotation of the actuator 14 with respect to the body 10 in one direction is allowed, and rotation of the actuator 14 with respect to the body 10 in the opposite direction is prevented. In so doing, the user is able, for example, to manipulate the anti-theft device 9 so as lock said device to the drawbar T of the trailer even when the lock cylinder 26 is operated (i.e. with the stop 30 in the active position); the lock cylinder 26 would have to be reversed (and the stop 30 deactivated) in order to obtain a movement of the actuator 14 in the opposite direction and thus be able to remove the anti-theft device 9 from the drawbar T of the trailer.

The one or more teeth of the toothing advantageously each have a first profile that is substantially parallel to a radial wall of the corresponding groove on the body 10, and a second profile that has, with respect to the opposite radial wall of the corresponding groove on the body 10, an inclination so as to allow the tooth to slide in the groove when a rotation is applied to the actuator 14 in one direction, whereas the tooth is prevented from sliding in the groove when a rotation is applied to the actuator 14 in the opposite direction. By way of example, the configuration of the profiles may be regarded as partially equivalent to a traditional ratchet (with the exception that, in the example shown, the groove on the body 10 is fixed, unlike the pawl of a traditional ratchet, which is movable).

The lock cylinder 26 is advantageously integral in axial translation and/or in rotation with the actuator 14.

The stop 30 may be mechanically connected to the end of the lock cylinder 26 proximal to the cap, and/or be brought into axial translation and/or into rotation by the lock cylinder 26.

The stop 30 is preferably configured to be guided to the active position and/or the inactive position by means of a cam mechanism driven by the lock cylinder 26.

According to one embodiment, the body of the stop 30 comprises a slot 32 having a first end which faces the through slot 24 when the stop 30 is in the inactive position, and a second end which faces the axis of the body 10 and/or is arranged at a right angle with respect to said first end, inside which slot 32 a pin 28 that projects axially from the lock cylinder 26 and is arranged in an eccentric manner with respect to the axis of said lock cylinder is insertable, said pin being oscillatable, integrally with a rotation of the lock cylinder 26, inside the slot 32 in order to abut alternately against the first end of said slot 32, so as to bring the stop 30 into the active position, and against the second end of said slot 32, so as to bring the stop 30 into the inactive position.

The actuator 14 may advantageously comprise a knob 22 which is integral in rotation with the cylindrical body 16 and axially projects from the body 10 on the opposite side of the latter with respect to the half-caps 12, said knob 22 being adapted to allow a user to manually manipulate the actuator 14, so as to rotate said actuator with respect to the body 10.

The knob 22 may advantageously have a radial hole 23 that is adapted to accommodate one end of a tool by means of which the user may also lock the anti-theft device 9 by exerting on the knob 22 a force that is greater than that which may be exerted manually. For example, the radial hole 23 may be configured to receive the tip of a hex key or Allen key.

According to a preferred embodiment, the anti-theft device 9 comprises elastic means 34 which are housed inside the cylindrical body 16 and adapted to push the stop 30 toward the active position.

The half-caps 12 may also comprise respective holes 12a that are aligned with corresponding slots 13a on the body 10, said slots 13a having an extension, in said transverse direction, greater than the diameter of said holes 12a, the anti-theft device 9 further comprising a pair of pins 13b which are inserted simultaneously into said holes 12a and said slots 13a, said pins being slidably accommodated in the slots 13a along said transverse direction. In so doing, the half-caps 12 are slidably supported by the body 10, and are able to perform a movement equivalent to the travel of the pins 13b in the slots 13a.

According to one embodiment, the lock cylinder 26 is removably accommodated in the cylindrical body 16 of the actuator 14.

According to one embodiment, at least one of the half-caps 12 may comprise a groove 12b which extends circumferentially and is adapted to receive a stop A projecting inside the coupler head of the drawbar T, in such a way as to also make the latter integral with the anti-theft device 9.

Throughout this description and in the claims, the terms and expressions indicating positions and orientations, such as "axial," "transverse," etc., refer to the axis of the body 10.

Various aspects and embodiments of an anti-theft device according to the invention have been described. It is understood that each embodiment may be combined with any other embodiment. Furthermore, the invention is not limited to the described embodiments, but may be varied within the scope defined by the appended claims.

## Claims

1. An anti-theft device (9), adapted to be inserted into the coupler head of the drawbar (T) of a trailer vehicle to prevent the insertion therein of the towball of a towing bracket, said anti-theft device (9) comprising:
- a body (10), inside which a cavity (11) is defined, which cavity extends in an axial direction;
- a cap, formed by a pair of half-caps (12) that are slidingly supported by the body (10) and movable in opposite directions along a transverse direction, perpendicular to said axial direction, from a compact configuration, in which the half-caps (12) are maximally close together with respect to said transverse direction and the anti-theft device (9) is configured to be able to be inserted into the coupler head of the drawbar (T), to an expanded configuration, in which the half-caps (12) are maximally spaced apart with respect to said transverse direction and the anti-theft device (9) is configured to avoid being removed from the coupler head of the drawbar (T);
- an actuator (14), accommodated in an axially movable and/or rotatable manner inside the cavity (11) of the body (10) and comprising a cylindrical body (16) which is hollow inside and axially surmounted by a tip (20) which is insertable into a corresponding seat defined by the two half-caps (12) inside these latter, said tip (20) being adapted to cause the expansion of said half-caps (12) from the compact condition to the expanded condition;
- a lock cylinder (26), operable in rotation by means of a key (K) and axially accommodated in the cylindrical body (16) of the body (10); and
- a stop (30), integral in axial translation and/or rotation with the cylindrical body (16) and movable by means of the lock cylinder (26) between an inactive position, in which the stop (30) avoids engaging the body (10) and the actuator (14) is movable with respect to the latter, and an active position in which the stop (30) engages the body (10) and the actuator (14) is integral with the latter.

2. The device according to claim 1, wherein the tip (20) of the actuator (14) is shaped as a conical portion, adapted to be inserted between the two half-caps (12) to cause the expansion thereof from the compact condition to the expanded condition, said actuator (14) being axially translatable from a retracted position, in which the conical portion (20) is maximally retracted axially with respect to the half-caps (12), which are in their compact condition, to an advanced position, in which the conical portion (20) is maximally projecting axially from the body (10) and maximally wedged between the two half-caps (12), which are in their expanded condition.

3. The device according to claim 1 or 2, wherein the side wall of the cylindrical body (16) comprises a through slot (24) which extends circumferentially and adapted to allow the stop (30) to pass from the inactive position, in which said stop (30) is radially retracted inside the cylindrical body (16), to the active position, in which said stop (30) projects radially outside the cylindrical body (16) through said through slot (24).

4. The device according to any one of the preceding claims, wherein the stop (30) comprises a body from which a toothing projects, which toothing is adapted, when the stop (30) is in the active position, to engage corresponding grooves which are provided on the internal wall of the body (10) and are turned towards the interior of the cavity (11), so that, in the condition in which the toothing engages with said grooves, the actuator (14) is integral with the body (10), and therefore a reciprocal rotation between said actuator (14) and said body (10) is prevented.

5. The device according to claim 4, wherein the toothing of the stop (30) and the corresponding grooves of the body (10) are configured in such a way that, in a condition in which the toothing engages with the corresponding grooves of the body (10), rotation of the actuator (14) with respect to the body (10) in one direction is allowed, and rotation of the actuator (14) with respect to the body (10) in the opposite direction is prevented.

6. The device according to claim 5, wherein the one or more teeth of the toothing each have a first profile substantially parallel to a radial wall of the corresponding groove on the body (10), and a second profile having, with respect to the opposite radial wall of the corresponding groove on the body (10), an inclination such as to allow the sliding of the tooth in the groove when a rotation is applied to the actuator (14) in one direction, whereas the sliding of the tooth in the groove is prevented when a rotation is applied to the actuator (14) in the opposite direction.

7. The device according to any one of claims 4 to 6, wherein the stop (30) is configured to be guided to the active position and/or the inactive position by means of a cam mechanism, driven by the lock cylinder (26).

8. The device according to claim 7, wherein the body of the stop (30) comprises a slot (32) having a first end facing the through slot (24) when the stop (30) is in the inactive position, and a second end facing the axis of the body (10) and/or disposed at a right angle with respect to said first end, inside which slot (32) a pin (28) that projects axially from the lock cylinder (26) and is arranged in an eccentric manner with respect to the axis of the latter is insertable, said pin being oscillatable, integrally with a rotation of the lock cylinder (26), inside the slot (32) to abut alternately against the first end of said slot (32), so as to bring the stop (30) into the active position, and against the second end of said slot (32), so as to bring the stop (30) into the inactive position.

9. The device according to any one of the preceding claims, wherein the cylindrical body (16) of the actuator has an external threading (18) adapted to engage a complementary internal threading of the body (10) in such a way that a rotation of the cylindrical body (14) about its own axis causes an axial translation of the actuator (14) inside the body (10).

10. The device according to any one of the preceding claims, wherein the actuator (14) comprises a knob (22) that is integral in rotation with the cylindrical body (16) and axially projects from the body (10) on the opposite side of the latter with respect to the half-caps (12), said knob (22) being adapted to allow a user to manually manipulate the actuator (14), making the latter rotate with respect to the body (10).

11. The device according to claim 10, wherein the knob (22) has a radial hole (23), suitable for accommodating one end of an Allen key.

12. The device according to any one of the preceding claims, comprising elastic means (34) which are housed inside the cylindrical body (16) and adapted to push the stop (30) towards the active position.

13. The device according to any one of the preceding claims, wherein the half-caps (12) comprise respective holes (12a) aligned with corresponding slots (13a) on the body (10), said slots (13a) having an extension in said transverse direction, greater than the diameter of said holes (12a), the anti-theft device (9) further comprising a pair of pins (13b) which are inserted simultaneously into said holes (12a) and said slots (13a), said pins being slidably received along said transverse direction in the slots (13a).

14. The device according to any one of the preceding claims, wherein the lock cylinder (26) is removably received in the cylindrical body (16) of the actuator (14).

15. The device according to any one of the preceding claims, wherein at least one of the half-caps (12) comprises a groove (12b), extending circumferentially and adapted to receive a stop projecting inside the coupler head of the drawbar (T), in such a way as to also make the latter integral with the anti-theft device (9).
